# EUROPÄISCHE PATENTANMELDUNG

(11) **EP 3 722 462 A1**
(43) Veröffentlichungstag der Anmeldung: **14.10.2020**
(21) Anmeldenummer: 19167814.3
(22) Anmeldetag: 08.04.2019
(51) Int. Cl.: C25B 1/00, C25B 15/08, C25B 1/04, C25B 3/04, C25B 15/02

(54) **ANLAGE UND VERFAHREN ZUM SPEICHERN ELEKTRISCHER ENERGIE**

(71) Anmelder: Siemens Aktiengesellschaft, 80333 München (DE)
(72) Erfinder: Baldauf, Manfred, 91056 Erlangen (DE); Taroata, Dan, 91058 Erlangen (DE)

(57) **Zusammenfassung**

Die Erfindung betrifft eine Anlage und ein Verfahren zum Herstellen von Wertstoffen aus Kohlenstoffdioxid mittels elektrischer Energie aus erneuerbaren Quellen. Zunächst wird eine erste Vorrichtung zum Erzeugen von Kohlenstoffdioxidneutralem Strom, insbesondere mittels Windenergie, Sonnenenergie und/oder Wasserkraft bereitgestellt. Weiterhin wird eine zweite Vorrichtung zum Erzeugen eines Gases umfassend Kohlenstoffdioxid bereitgestellt. Es wird auch eine dritte Vorrichtung zum elektrochemischen Umsetzen von Kohlenstoffdioxid zu einem Wertstoff bereitgestellt. Der in der ersten Vorrichtung erzeugte Strom wird über eine erste elektrische Leitung in die dritte Leitung geführt. Das abgetrennte Kohlenstoffdioxid aus der zweiten Vorrichtung wird ebenfalls über eine Rohrleitung in die dritte Vorrichtung geführt. In der dritten Vorrichtung wird das Kohlenstoffdioxid zu einem Wertstoff umgewandelt.

## Beschreibung

Die Erfindung betrifft eine Anlage und ein Verfahren zum Speichern elektrischer Energie und zum Umsetzen von Kohlenstoffdioxid zu Wertprodukten.

Die Nachfrage nach Strom schwankt im tagezeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke, Sektorenkopplung oder Speicher, um diese Energie zu nutzen.

Eine der derzeitig angedachten Lösungen im Rahmen der Sektorenkopplung ist das Umwandeln von elektrischer Energie in Wertprodukte, die insbesondere als Plattformchemikalien, insbesondere Ethen, Methan, Ethan, oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Wertstoffen, insbesondere zu Kohlenstoffmonoxid, wird seit einigen Jahren erforscht und es gibt Bemühungen, ein elektrochemisches System zu entwickeln, das eine Kohlenstoffdioxidmenge entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden. Eine Verwertung dieses Kohlenstoffdioxids ist daher wünschenswert.

Das wirtschaftliche und effiziente Betreiben eines Kohlenstoffdioxid-Elektrolyseurs ist möglich, wenn ein Überangebot an Strom herrscht, eine Kohlenstoffquelle vorhanden ist und unter Umständen eine Wasserquelle vorhanden ist. Nachteilig aber sind selten alle drei Voraussetzungen an einem Ort erfüllt, was das effiziente und wirtschaftliche Betreiben eines Kohlenstoffdioxid-Elektrolyseurs an unterschiedlichen örtlichen Beschaffenheiten einschränkt.

Es ist daher Aufgabe der Erfindung eine Anlage und ein Verfahren anzugeben, die es ermöglichen, die Kohlenstoffdioxid-Elektrolyse effizient und örtlich flexibel zu betreiben.

Die Aufgabe wird erfindungsgemäß mit einer Anlage gemäß Anspruch 1 und einem Verfahren gemäß Anspruch 10 gelöst.

Die erfindungsgemäße Anlage zum Speichern elektrischer Energie und Umsetzen von Kohlenstoffdioxid zu Wertprodukten umfasst eine erste Vorrichtung zur Kohlenstoffdioxid-neutralen Stromerzeugung mittels erneuerbarer Energie, insbesondere mittels Windenergie, Sonnenergie und/oder Wasserkraft. Sie umfasst weiterhin eine zweite Vorrichtung zum Bereitstellen von Kohlenstoffdioxid umfassendem Gas. Weiterhin umfasst die Anlage eine dritte Vorrichtung zur elektrochemischen Umwandlung von Kohlenstoffdioxid zu einem ersten Wertstoff. Dabei ist die erste Vorrichtung mit der dritten Vorrichtung über eine erste Leitung verbunden. Die zweite Vorrichtung ist mit der dritten Vorrichtung über eine zweite Leitung verbunden.

Das erfindungsgemäße Verfahren zum Herstellen von Wertstoffen aus Kohlenstoffdioxid mittels elektrischer Energie aus erneuerbaren Quellen umfasst zunächst das Bereitstellen einer Anlage umfassend eine erste Vorrichtung zum Erzeugen von Strom mittels erneuerbarer Energie, insbesondere mittels Windenergie, Sonnenenergie und/oder Wasserkraft. Weiterhin umfasst die Anlage eine zweite Vorrichtung zum Erzeugen eines Kohlenstoffdioxid umfassenden Gases. Weiterhin umfasst die Anlage eine dritte Vorrichtung zum elektrochemischen Umwandeln von Kohlenstoffdioxid zu einem ersten Wertstoff, wobei die erste Vorrichtung mit der dritten Vorrichtung über eine erste Leitung verbunden ist. Die zweite Vorrichtung ist mit der dritten Vorrichtung über eine zweite Leitung verbunden. Der in der ersten Vorrichtung erzeugte Strom wird über die erste Leitung in die dritte Vorrichtung geführt. Das in der zweiten Vorrichtung erzeugte Kohlenstoffdioxid umfassende Gas wird über die zweite Leitung in die dritte Vorrichtung geführt. In der dritten Vorrichtung wird das Kohlenstoffdioxid elektrochemisch zu einem ersten Wertstoff umgewandelt.

Ein Vorteil der Erfindung liegt darin, das Kohlenstoffdioxid direkt vor Ort abzutrennen oder zu erzeugen. Dadurch wird es vermieden, Kohlenstoffdioxid zu transportieren. Weiterhin wird die Effizienz, und damit auch die Gesamtwirtschaftlichkeit der Wertstoffproduktion verbessert, da am selben Ort eine Kohlenstoffdioxid-Quelle und elektrische Energie aus erneuerbaren Quellen verfügbar sind. Besonders vorteilhaft ist, dass der Wertstoff mit geringen spezifischen Kohlenstoffdioxid-Emissionen hergestellt werden kann.

In einer vorteilhaften Ausgestaltung und Weiterbildung der Erfindung weisen die erste und die zweite Leitung jeweils eine maximale Länge von 100 km, bevorzugt von maximal 10 km, auf. Ein Vorteil dieser Länge der Transportwege liegt darin, dass für den Kohlenstoffdioxid-Transport keine Schiffe oder Lastwägen eingesetzt werden müssen. Es ist möglich das Kohlenstoffdioxid energieeffizient durch Rohrleitungen von der zweiten Vorrichtung in die dritte Vorrichtung zu führen.

In einer weiteren vorteilhaften Ausgestaltung und Weiterbildung der Erfindung ist die zweite Vorrichtung geeignet, Sauergas zu verbrennen und Kohlenstoffdioxid bereitzustellen. In anderen Worten wird in der zweiten Vorrichtung Sauergas verbrannt und somit Kohlenstoffdioxid bereitgestellt. Besonders vorteilhaft wird das Kohlenstoffdioxid, welches bei einer Sauergasverbrennung entsteht und üblicherweise emittiert wird, abgetrennt und für eine Kohlenstoffdioxid Elektrolyse verwendet. Somit wird vorteilhaft die erhöhte Kohlenstoffdioxid-Emission der Sauergasverbrennung vermindert. Das Kohlenstoffdioxid wird verwendet, um Wertstoffe herzustellen.

In einer weiteren vorteilhaften Ausgestaltung und Weiterbildung der Erfindung ist die zweite Vorrichtung geeignet, Kohlenstoffdioxid aus Erdgas abzutrennen. In anderen Worten wird in der zweiten Vorrichtung Kohlenstoffdioxid aus Erdgas abgetrennt. Vorteilhaft kann das so aufgearbeitete Erdgas direkt in eine Pipeline eingespeist werden.

In einer weiteren Ausgestaltung und Weiterbildung der Erfindung kann Kohlenstoffdioxid und gegebenenfalls auch Produktwasser aus Gasturbinen gewonnen werden, wobei die Gasturbinen wiederum zur Kompression von Erdgas eingesetzt werden. Hier treiben die Gasturbinen einen Verdichter an.

Sowohl bei der Verbrennung des Sauergases als auch bei der Abtrennung des Kohlenstoffdioxids aus dem Erdgas fällt Wasser an. Dieses Wasser kann bevorzugt als Nachfüll-Wasser, englisch sogenanntes "Make-up-Wasser", für die Kohlenstoffdioxid-Elektrolyse verwendet werden. Der Kohlenstoffdioxid-Elektrolyseur weist Wasserverluste auf, da sowohl das Anodenprodukt Sauerstoff als auch der Wertstoff, der an der Kathode entsteht, feucht aus dem Kohlenstoffdioxid-Elektrolyseur ausgetragen werden. Somit verliert ein Elektrolyt, der im Kohlenstoffdioxid-Elektrolyseur vorliegt, an Wasser. Dieser Verlust kann vorteilhaft mit dem Nachfüll-Wasser ausgeglichen werden. Das Wasser kann zusätzlich oder alternativ als Edukt in einen Wasser-Elektrolyseur geführt werden.

In einer weiteren vorteilhaften Ausgestaltung und Weiterbildung der Erfindung werden unterirdische Wasserlagerungsstätten, mit sogenanntem fossilem Wasser, genutzt. Dieses Wasser kann einerseits als Nachfüll-Wasser in dem Kohlenstoffdioxid-Elektrolyseur eingesetzt werden. Es kann andererseits auch als Eduktwasser in einem Wasser -Elektrolyseur verwendet werden.

In einer weiteren vorteilhaften Ausgestaltung und Weiterbildung der Erfindung ist die zweite Vorrichtung geeignet, Kohlenstoffdioxid aus einer geothermalen Quelle abzutrennen. In anderen Worten wird Kohlenstoffdioxid aus einer geothermalen Quelle gewonnen und abgetrennt. Dabei kann gegebenenfalls auch Nachfüll-Wasser durch Entsalzungsverfahren aus der geothermalen Sole gewonnen werden.

In einer weiteren vorteilhaften Ausgestaltung und Weiterbildung der Erfindung wird Kohlenstoffdioxid aus Verbrennungsprozessen von Motoren oder Gasturbinen, die zum Bereitstellen des lokal benötigten Stroms dienen, als Edukt für den Kohlenstoffdioxid-Elektrolyseur verwendet. Dies kann insbesondere auch dort sein, wo Gasturbinen aus Pipelines mit Gas versorgt werden.

In einer weiteren vorteilhaften Ausgestaltung und Weiterbildung der Erfindung ist die zweite Vorrichtung geeignet, Kohlenstoffdioxid aus einer unterirdischen Lagerstätte zu gewinnen. Vorteilhaft kann die Reinheit von unterirdischen Lagerstätten so hoch sein, dass eine Aufarbeitung des Kohlenstoffdioxids mit wenig energetischem Aufwand möglich ist.

In einer weiteren vorteilhaften Ausgestaltung und Weiterbildung der Erfindung ist die zweite Vorrichtung eine Adsorptionseinheit, eine Membraneinheit, eine Extraktionseinheit oder eine Absorptionseinheit. Die Wahl des jeweiligen Abtrennverfahrens hängt von der Kohlenstoffdioxid-Konzentration im Rohgas und den Begleitstoffen ab. Beispielsweise gibt es unter den Adsorbentien solche, die mit Schwefelwasserstoff irreversible reagieren und deshalb nicht für Sauergas eingesetzt werden können. Weiterhin eignen sich Membranen nicht für die Kohlenstoffdioxid-Abtrennung bei niedrigen Kohlenstoffdioxid-Partialdrücken, da dann die treibende Kraft zu gering ist und folglich riesige Membranflächen gebrauchte würden. Dadurch würde die Effizienz sinken und die Kosten würden steigen.

In einer weiteren vorteilhaften Ausgestaltung und Weiterbildung der Erfindung ist der erste Wertstoff Kohlenstoffmonoxid oder ein Kohlenwasserstoff. Besonders vorteilhaft ist es, Kohlenstoffmonoxid in der dritten Vorrichtung zu erzeugen und anschließend in einer fünften Vorrichtung zu Kohlenwasserstoffen insbesondere flüssigen Kohlenwasserstoffen, weiterzuverarbeiten, da diese leichter zu transportieren sind. Hierfür wird entweder Wasserstoff oder Wasser als zweites Edukt benötigt. In anderen Worten wird das Kohlenstoffmonoxid aus der Kohlenstoffdioxid-Elektrolyse der dritten Vorrichtung in eine transportierbare Form, die ein flüssiger Kohlenwasserstoff ist, umgewandelt.

Es ist aber ebenso möglich, das Kohlenstoffmonoxid mit Wasserstoff zu Synthesegas zu mischen. Das Synthesegas kann für eine nachfolgende chemische Umsetzung eingesetzt werden. Besonders vorteilhaft ist es, wenn der Wasserstoff in einer vierten Vorrichtung, einem Wasser-Elektrolyseur, gewonnen wird. Besonders vorteilhaft ist es, wenn der Wasser-Elektrolyseur mit elektrischer Energie aus erneuerbaren Energien betrieben wird.

In einer weiteren vorteilhaften Ausgestaltung und Weiterbildung der Erfindung wird als der erste Wertstoff wenigstens ein Kohlenwasserstoff hergestellt. Dieser Kohlenwasserstoff wird direkt transportiert. In anderen Worten wird der Kohlenwasserstoff transportiert, ohne ihn in eine weitere Form umzuwandeln. Insbesondere ist dies für flüssige Kohlenwasserstoffe sinnvoll.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Anlage mit einer ersten Vorrichtung, einer zweiten Vorrichtung und einer dritten Vorrichtung zum Erzeugen eines Wertstoffs aus erneuerbaren Energien;
- Figur 2: eine Anlage mit einer ersten Vorrichtung, einer zweiten Vorrichtung, einer dritten Vorrichtung und einer vierten Vorrichtung zum Erzeugen von Synthesegas aus erneuerbaren Energien.

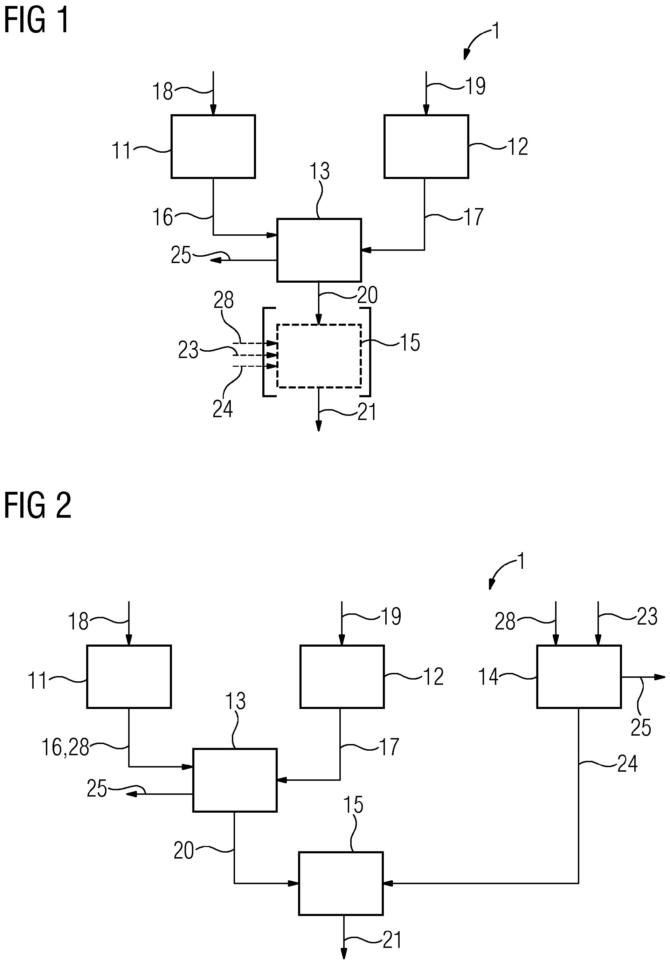

In Figur 1 ist eine Anlage 1 dargestellt. Sie umfasst eine erste Vorrichtung 11. Die erste Vorrichtung 11 erzeugt aus erneuerbarer Energie 18 elektrischen Strom 28. Die erste Vorrichtung 11 ist insbesondere ein Windrad, eine Photovoltaikanlage oder ein Wasserkraftwerk. Die Anlage 1 umfasst weiterhin eine zweite Vorrichtung 12. Die zweite Vorrichtung ist insbesondere eine Abtrennvorrichtung, die aus einer Kohlenstoffdioxid-Quelle 19 Kohlenstoffdioxid 17 abtrennt. Die zweite Vorrichtung 12 ist insbesondere eine Gaswäscheeinheit. Die Anlage 1 umfasst weiterhin eine dritte Vorrichtung 13. Die dritte Vorrichtung 13 ist ein Kohlenstoffdioxid-Elektrolyseur.

Die in der ersten Vorrichtung 11 erzeugte elektrische Energie wird über eine erste elektrische Leitung 16 in die dritte Vorrichtung 13, den Kohlenstoffdioxid-Elektrolyseur, geführt. Weiterhin wird das in der zweiten Vorrichtung 12 erzeugte Kohlenstoffdioxid 17 über eine erste Rohrleitung in die dritte Vorrichtung 13 geführt. In dem Kohlenstoffdioxid-Elektrolyseur wird das Kohlenstoffdioxid 17 elektrochemisch zu einem Wertstoff 20 umgesetzt. An der Anode des Kohlenstoffdioxid-Elektrolyseurs wird typischerweise Sauerstoff 25 produziert. Dieser verlässt die Anlage 1.

Der Wertstoff 20 kann alternativ Kohlenstoffmonoxid sein. Dann wird das Kohlenstoffmonoxid 20 in eine fünfte Vorrichtung 15 geführt. In die fünfte Vorrichtung 15 wird im Falle, dass die fünfte Vorrichtung ein Reaktor ist, Wasserstoff 24 geführt. Für den Fall, dass die fünfte Vorrichtung 15 ein Elektrolyseur ist, wird elektrischer Strom 28 und Wasser 23 in die fünfte Vorrichtung 15 geführt. In dieser fünften Vorrichtung 15 wird das Kohlenstoffmonoxid 20 in einen flüssigen Kohlenwasserstoff 21 umgewandelt. In dieser Form lässt sich der Wertstoff energieeffizienter transportieren, da die Dichte des flüssigen Kohlenwasserstoffs deutlich über der Gasdichte des Kohlenstoffmonoxids liegt.

Der Wertstoff kann alternativ direkt in der dritten Vorrichtung hergestellter flüssiger Kohlenwasserstoff sein. In diesem Fall verlässt der Wertstoff 20 die Anlage 1 und kann direkt ohne weitere Umwandlung transportiert werden.

Ein Transport ist insbesondere über Pipelines, Schiffe, Lastkraftwägen oder Züge möglich. Bei großen Produktmengen sind Pipelines uns Schiffe, je nach Standort der Anlage, bevorzugt.

Figur 2 zeigt ebenfalls eine Anlage 1. Die Anlage 1 umfasst eine erste Vorrichtung 11 zum Erzeugen von elektrischem Strom aus erneuerbaren Energien 18. Die Anlage 1 umfasst weiterhin eine zweite Vorrichtung 12 zum Abtrennen von Kohlenstoffdioxid 17 aus einer Kohlenstoffdioxid-Quelle 19. Die elektrische Energie 16 und das Kohlenstoffdioxid 17 werden in eine dritte Vorrichtung 13, einen Kohlenstoffdioxid-Elektrolyseur, geführt. Dort wird das Kohlenstoffdioxid 17 zu dem ersten Wertstoff 20 umfassend Kohlenstoffmonoxid 22 reduziert. An der Anode wird typischerweise Sauerstoff 25 erzeugt. Dieser verlässt die Anlage 1.

Die Anlage 1 umfasst weiterhin eine vierte Vorrichtung 14. Die vierte Vorrichtung 14 ist ein Wasser-Elektrolyseur. In diesen wird elektrische Energie 28 aus erneuerbarer Energie 18 geführt. Außerdem wird Wasser 23 in den Wasserelektrolyseur 14 geführt. Dort wird das Wasser in Wasserstoff 24 und Sauerstoff 25 gespalten. Der Sauerstoff 25 verlässt die Anlage 1. Der Wasserstoff 24 wird in eine fünfte Vorrichtung 15, in diesem Fall ein Reaktor 26 geführt. In dem Reaktor 26 werden das Kohlenstoffmonoxid und der Wasserstoff in die flüssige transportable Form des Wertprodukts 21, insbesondere in einen flüssigen Kohlenwasserstoff umgesetzt.

### Bezugszeichenliste

- 1: Anlage
- 11: erste Vorrichtung
- 12: zweite Vorrichtung
- 13: dritte Vorrichtung
- 14: vierte Vorrichtung
- 15: fünfte Vorrichtung
- 16: erste elektrische Leitung
- 17: Kohlenstoffdioxid
- 18: erneuerbare Energie
- 19: Kohlenstoffdioxid-Quelle
- 20: Wertstoff
- 21: Transportform des Wertstoffs
- 22: Kohlenstoffmonoxid
- 23: Wasser
- 24: Wasserstoff
- 25: Sauerstoff
- 28: elektrische Energie

## Patentansprüche

1. Anlage (1) zur Nutzung elektrischer Energie mittels elektrochemischer Umwandlung von Kohlenstoffdioxid zu Wertprodukten (20) mit
- einer ersten Vorrichtung (11) zur Kohlenstoffdioxid-neutralen Stromerzeugung mittels erneuerbarer Energien,
- einer zweiten Vorrichtung (12) zum Bereitstellen von Kohlenstoffdioxid,
- einer dritten Vorrichtung (13) zur elektrochemischen Umwandlung von Kohlenstoffdioxid zu einem ersten Wertstoff (20), wobei die erste Vorrichtung (11) mit der dritten Vorrichtung (13) über eine erste Leitung (16) verbunden ist und die zweite Vorrichtung (12) mit der dritten Vorrichtung (13) über eine zweite Leitung (17) verbunden ist.

2. Anlage (1) nach Anspruch 1, wobei die erste Leitung (16) und die zweite Leitung (17) jeweils eine maximale Länge von 100 km aufweisen.

3. Anlage (1) nach einem der Ansprüche 1 oder 2, wobei die zweite Vorrichtung (12) geeignet ist, Sauergas zu verbrennen und Kohlenstoffdioxid bereitzustellen.

4. Anlage (1) nach Anspruch 1 oder 2, wobei die zweite Vorrichtung (12) geeignet ist, Kohlenstoffdioxid aus Erdgas direkt oder Erdgas aus Gasturbinen, wobei die Gasturbinen wiederum zur Kompression von Erdgas eingesetzt werden, oder aus Verbrennungsprozessen von Motoren oder Gasturbinen, die zum Bereitstellen des lokal benötigten Stroms dienen, abzutrennen.

5. Anlage (1) nach einem der Ansprüche 1 oder 2, wobei die zweite Vorrichtung (12) geeignet ist, Kohlenstoffdioxid aus einer unterirdischen Lagerstätte zu gewinnen.

6. Anlage (1) nach einem der Ansprüche 1 oder 2, wobei die zweite Vorrichtung (12) geeignet ist, Kohlenstoffdioxid aus einer geothermalen Quelle abzutrennen.

7. Anlage (1) nach einem der vorhergehenden Ansprüche, wobei der erste Wertstoff (20) Kohlenstoffmonoxid (22) oder ein Kohlenwasserstoff ist.

8. Anlage (1) nach einem der vorhergehenden Ansprüche mit einer vierten Vorrichtung (14) zur Elektrolyse von Wasser (23).

9. Verfahren zum Herstellen von Wertstoffen (20) aus Kohlenstoffdioxid mittels elektrischer Energie aus erneuerbaren Quellen mit folgenden Schritten:
- Bereitstellen einer Anlage (1) mit einer ersten Vorrichtung (11) zum Erzeugen von Kohlenstoffdioxid-neutralem Strom mittels erneuerbarer Energien, mit einer zweiten Vorrichtung (12) zum Erzeugen eines Gases umfassend Kohlenstoffdioxid, und mit einer dritten Vorrichtung (13) zum elektrochemischen Umwandeln von Kohlenstoffdioxid zu einem ersten Wertstoff (20), wobei die erste Vorrichtung (11) mit der dritten Vorrichtung (13) über eine erste Leitung (16) verbunden ist und die zweite Vorrichtung (12) mit der dritten Vorrichtung (13) über eine zweite Leitungen (17) verbunden ist,
- Führen des erzeugten Stroms über die erste Leitung (16) und Führen des Kohlenstoffdioxids über die zweite Leitung (17) in die dritte Vorrichtung (13),
- Umwandeln des Kohlenstoffdioxids mittels eines elektrochemischen Verfahrens zu einem ersten Wertstoff (20) in der dritten Vorrichtung (13).

10. Verfahren nach Anspruch 9, wobei als der erste Wertstoff (20) Kohlenstoffmonoxid hergestellt wird.

11. Verfahren nach Anspruch 10, wobei die Anlage eine fünfte Vorrichtung (15) umfasst und das Kohlenstoffmonoxid in der fünften Vorrichtung (15) zu einer flüssigen Komponente umfassend Kohlenwasserstoffe umgesetzt wird und die flüssige Komponente transportiert wird.

12. Verfahren nach Anspruch 9, wobei als der erste Wertstoff (20) wenigstens ein Kohlenwasserstoff hergestellt wird und dieser direkt transportiert wird.

13. Verfahren nach einem der Ansprüche 9 bis 12, wobei Wasser, welches in der zweiten Vorrichtung erzeugt wird, in die dritte Vorrichtung (13) und/oder in die vierte Vorrichtung (14) geführt wird.

14. Verfahren nach Anspruch 13, wobei das Wasser aus einer Sauergasverbrennung, einer Erdgasaufbereitung, aus einer Verbrennung von Erdgas in einer Gasturbine oder einem Motor, aus unterirdischen Lagerstätten oder aus einer Geothermalsole verwendet wird.

15. Verfahren nach einem der Ansprüche 12 bis 14, wobei in einer vierten Vorrichtung (14) Wasser (23) elektrochemisch zu Wasserstoff (24) und Sauerstoff (25) gespalten wird und der Wasserstoff (24) zum Umsetzen des Kohlenstoffmonoxids (22) zu flüssigen Kohlenwasserstoffen in der fünften Vorrichtung (15) verwendet wird.

16. Verfahren nach einem der Ansprüche 9 bis 15, wobei als erneuerbare Energie Windenergie, Sonnenenergie und/oder Wasserkraft eingesetzt wird.
